# EUROPEAN PATENT SPECIFICATION

(11) **EP 3 371 279 B1**
(45) Date of publication and mention of the grant of the patent: **15.01.2020**
(21) Application number: 15907898.9
(22) Date of filing: 04.11.2015
(51) Int. Cl.: C10L 1/02, C07G 1/00, C08H 7/00, C10G 1/00, C12P 7/64, D21C 11/00

(54) **A PROCESS FOR PRODUCING A HYDROCARBON PRODUCT FROM LIGNIN OIL**
VERFAHREN ZUR HERSTELLUNG EINES KOHLENWASSERSTOFFPRODUKTES AUS LIGNINÖL
PROCÉDÉ DE PRODUCTION D'UN PRODUIT HYDROCARBONÉ À PARTIR D'HUILE DE LIGNINE

(43) Date of publication of application: 12.09.2018
(73) Proprietor: SCA Forest Products AB, 851 88 Sundsvall (SE)
(72) Inventor: KUGGE, Christian, S-851 88 Sundsvall (SE); HULTGREN, Anders, S-851 88 Sundsvall (SE); DANNENBAUER, Kai, 69124 Heidelberg (DE); LIEBOLD, Claudia, 69168 Wiesloch (DE); HUBER, Florian, 67346 Speyer (DE)
(74) Representative: Weickmann & Weickmann PartmbB
(86) International application number: PCT/SE2015/051164
(87) International publication number: WO 2017/078582

(56) References cited:
- WO-A1-2013/173332
- WO-A1-2014/063852
- WO-A1-2015/004329
- WO-A2-2006/119357
- WO-A2-2008/039756
- CN-A- 102 604 668
- US-A1- 2008 050 792
- US-A1- 2013 232 853

## Description

### TECHNICAL FIELD

The present application relates to a process for producing a hydrocarbon product from lignin oil, and a hydrocarbon product obtainable by the process.

### BACKGROUND ART

There is a desire to provide renewable sources for hydrocarbon products for use as fuels and for manufacture of chemicals. There is also a desire to recover lignin and chemicals from spent black liquor, and methods for that are known in the art, for example WO2014/193289 describes a method in which lignin is precipitated from black liquor by means of an acid treatment.

### SUMMARY OF THE INVENTION

The present invention aims at providing a process for producing renewable hydrocarbon products from a lignin based oil.

The process of the present application relates to producing a hydrocarbon product from a lignin oil, wherein the lignin oil has an oxygen content of 10-30 wt-%, an average weight molecular weight of 500-800 g/mol with a polydispersity of 2, a heating value of 25-35 MJ/kg, a water content of 0-1.5 wt-%, a sodium content of 400-500 ppm, a potassium content of 50-100 ppm, a sulfur content of 1-2.5 wt-% and a total acid number of 110-125 mg KOH/g oil.

The process for producing the hydrocarbon product comprises the steps of treating the lignin oil in a rector in the presence of one or more of a hydrodesulfurization catalyst selected from NiMo on alumina or CoMo on alumina; or a hydrodesulfurization and cracking catalyst selected from NiMo on zeolite or CoMo on zeolite, or a hydrodeoxygenation and cracking catalyst selected from NiO on zeolite, zeolite alone or combinations thereof, or a hydrodeoxygenation catalyst selected from Ni/NiO, Cu/Cr, Pd/Cu, or Pt on a support material, such as chromite and/or alumina and/or zirconia and/or graphite and/or carbon and/or silica; or combinations thereof, and applying a H₂ pressure of 30-160 bar, preferably 50-150 bar, a gas to oil ratio (GTO) of 200-2000 l/l (STP conditions), preferably 500-1500 l/l, at a temperature of 290-400 °C, preferably 300-360 °C, and with a liquid hourly space velocity (LHSV) of 0.25-2 h⁻¹ and preferably 0.5-1 h⁻¹ followed by cooling the reaction product from the reactor to 20-30 °C, and separating the reaction product by phase separation, into a gaseous phase, a liquid hydrocarbon product phase, and a water phase, thereby obtaining the hydrocarbon product.

The reactor used in the process is preferably a reactor comprising a packed bed, which includes a first section of inert filling material and/or guard material and optionally a catalyst selected as defined above and a second section of the catalyst selected as defined above and optionally a guard material on top of the catalyst, and a third section of inert filling material and optionally a catalyst selected as defined above, and wherein the lignin oil passes first the first section, then the second section, and then the third section.

The reactor preferably comprises a pre-heating zone and an isothermal zone, wherein the lignin oil temperature in the isothermal zone is the reaction temperature 290-400 °C, preferably 300-360 °C, and the lignin oil temperature in the pre-heating zone is 1-10 °C below the reaction temperature, and wherein the isothermal zone comprises the second section of the packed bed, and optionally a portion of the first section of the packed bed.

The catalyst in the second section is advantageously a physical mixture of NiMo on alumina and NiO on zeolite, and the volume ratio of NiMo on alumina and NiO on zeolite is preferably 1-4:1, more preferably 1.5-2.5:1, most preferably 2:1. Alternatively, the catalyst in the second section is a physical mixture of Ni/NiO on alumina/graphite and NiO on zeolite, preferably with a volume ratio of Ni/NiO on alumina/graphite and NiO on zeolite is 1-4:1, more preferably 1.5-2.5:1, most preferably 2:1.

The process resulting hydrocarbon product is preferably separated into three fractions by means of distillation, wherein a first fraction comprises hydrocarbons having a boiling point of 35-180 °C, a second fraction comprises hydrocarbons having a boiling point of 181-340 °C, and
a third fraction comprises hydrocarbons having a boiling point above 340 °C.

A fraction having a boiling point of 250-285 °C is separated from the hydrocarbon product, said fraction comprising dibenzyl, cyclohexylethylbenzene, 4-methyldiphenylmethane, benzylcyclohexane, dicyclohexylmethane and 1,2-dicyclohexylethane may be of particular interest.

The gaseous phase separated in the phase separation is preferably led through a gas treater, whereby H₂S is removed, and H₂ is then separated and recycled to the reactor, and the rest of the gases are retrieved as a gaseous hydrocarbon containing product. The gaseous hydrocarbon containing product may be led to a steam reformer producing H₂ and CO or CO₂, wherein H₂ and CO are optionally led back to the process.

Preferably, the lignin oil is desalted in a desalting unit prior to the reactor, said desalting unit comprising a bed of adsorbent, absorbent, or ion exchange material or combinations thereof.

Moreover, additional viscosity modifying, and/or lubricating and/or carbonium/arenium ion scavenging components may be added to the lignin oil in an amount of 1-80 wt-%, preferably 10-20 wt% based on the weight of the lignin oil prior to the reactor and any desalting unit, said additional components being a combination of a solvent, preferably methanol, ethanol, toluene, o-, m-, p-xylene, p-cymene, anisole, diesel, gasoline, benzyl alcohol; or phenol, 2-naphthol, catechol, thymol, guaiacol, cresol; and/or mixtures thereof, and the hydrocarbon product obtained by the process.

The lignin oil fed into the process is most preferably a lignin oil obtainable by a process in which a black liquor composition comprising kraft black liquor and having a hydroxide ion concentration of 1-40 g/l, based on the volume of black liquor, is reacted, preferably under a H₂ or H₂/CO syngas pressure of 5-150 bar, at 220-350 °C for 10-120 minutes in the absence of a solid catalyst; or at 180-240 °C for 10-120 minutes in the presence of a solid catalyst, thereby causing depolymerization of lignin in the black liquor; the reacted composition is cooled to a temperature below the boiling point of a solvent to be added subsequently, and is thereafter acidified until a pH of 4-5 is reached; and a solvent is added to the composition in order to extract oil from the composition, and the composition is separated by phase separation in a first separation step into an oil phase comprising solvent, oil, and organic acids; a first water phase comprising water, salts, and non-depolymerized lignin solids; and a second water phase comprising water and salts; the oil phase is filtered to remove any particles, and is then desalted in a water wash step by adding water and separating by phase separation into a second separation step into an oil phase comprising oil and solvent, and a water phase comprising salts; or by adding adsorbent and/or absorbent material or ion exchange material, or combinations thereof; and solvent comprised in the oil phase is evaporated, whereby the lignin oil is obtained.

The present invention also relates to a hydrocarbon product obtained by the above process said product comprising cyclohexane, methylcyclohexane, toluene, ethylcyclohexane, ethylcyclopentane, propylcyclohexane, propylbenzene, 1-methyl-4-(1-methylethyl) cyclohexane, butylcyclohexane, decalin, tetralin, methyltetralin, butylbenzene, decahydro-2-methylnaphthalene, pentylcyclohexane, hexylcyclohexane, diethylcyclohexane, bicyclohexyl, biphenylmethane, 1-methyl-2-cyclohexylcyclohexane, dicyclohexylmethane, benzylcyclohexane, methyldicyclohexylmethane, 1,2-dicyclohexylethane, 1-phenyl-1-cyclohexylethane, 1-phenyl-2-2cyclohexylethane, cyclohexylethylbenzene, dibenzyl, 4-methyldiphenylmethane, 3-methyldicyclohexylmethane, 1,3-dicyclohexylpropane, n-heptadecane, 1,1'-(1,4-butanediyl)-cyclohexane, n-octadecane, 1,1-dicyclohexylpropane, and containing less than 0.2 wt-% oxygen.

### BRIEF DESCRIPTION OF THE DRAWINGS

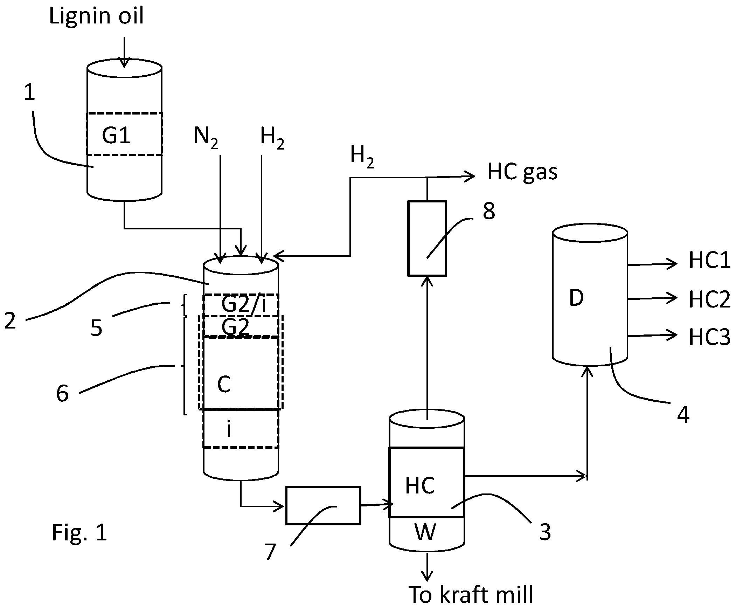

Figure 1 schematically illustrates the process of the present application.

### DETAILED DESCRIPTION

The present invention relates to a process for producing a hydrocarbon product from a lignin oil, wherein the lignin oil is treated in a reactor in the presence of catalyst and hydrogen. The lignin oil used as starting material for the process has an oxygen content of 10-30 wt-%, an average weight molecular weight of 500-800 g/mol with a polydispersity of 2, a heating value of 25-35 MJ/kg, a water content of 0-1.5 wt-%, a sodium content of 400-500 ppm, a potassium content of 50-100 ppm, a sulfur content of 1-2.5 wt-% and a total acid number (TAN) of 110-125 mg KOH/g oil (ISO 660 standard). For example, the lignin oil used herein may contain no water, or 1% water and 25% oxygen. The weight average molecular weight is determined by gel permeation chromatography (GPC) with tetrahydrofuran as the solvent and where the standard is polystyrene.

The lignin oil can be obtained by a process, which is described in detail in the applications PCT/SE2015/050969 and PCT/SE2015/050970. In this process a black liquor composition comprising kraft black liquor and having a hydroxide ion concentration of 1-40 g/l, based on the volume of black liquor, is reacted, preferably under a H₂ or H₂/CO syngas pressure of 5-150 bar, at 220-350 °C for 10-120 minutes in the absence of a solid catalyst; or at 180-240 °C for 10-120 minutes in the presence of a solid catalyst, thereby causing depolymerization of lignin in the black liquor. The reacted composition is then cooled to a temperature below the boiling point of a solvent to be added subsequently, and is thereafter acidified until a pH of 4-5 is reached; and a solvent is added to the composition in order to extract oil from the composition, and the composition is separated by phase separation in a first separation step into an oil phase comprising solvent, oil, and organic acids; a first water phase comprising water, salts, and non-depolymerized lignin solids; and a second water phase comprising water and salts. The oil phase is filtered to remove any particles, and is then desalted in a water wash step by adding water and separating by phase separation into a second separation step into an oil phase comprising oil and solvent, and a water phase comprising salts; or by adding adsorbent and/or absorbent material or ion exchange material, or combinations thereof; and solvent comprised in the oil phase is evaporated, whereby the lignin oil is obtained.

There is a large range of different bio-oils originated from different plant species (e.g. wood, sawdust, switchgrass, crop, straw, sugar cane bagasse) and produced in various ways giving a unique composition for each of them. A well-known technology is pyrolysis which is to heat biomass at 300-900 °C in the absence of air. Slow, intermediate and fast pyrolysis of almost dry (typically 4-10% moisture content) feedstock such as pine sawdust or wood chips give a pyrolysis oil of unique components and all pyrolysis oils generally contains 12-40% water and 35-40% oxygen attached to the organic components reflecting the low heating value of 16-19 MJ/kg. The water is part of the oil and the water/oil do not phase separate, meaning that the pyrolysis oil is an emulsion. The physical state of the pyrolysis oil and the range of oil components and the water content are all different to the lignin oil developed for the present process, as the lignin oil used herein typically contains no water or 1% water and 25% oxygen. The oil components obtained from pyrolysis of lignocellulosic (typically wood) material will be much broader (typically over 300 compounds) compared with the lignin oil used herein, as the feedstock contains cellulose and all other woody components. A ¹³C NMR spectrum of typical components obtained from pyrolysis is shown below (Zhang et al. in Sustainable Chem. Eng. 2015, DOI: 10.1021/acssuschemeng.5b00968, the supporting information).

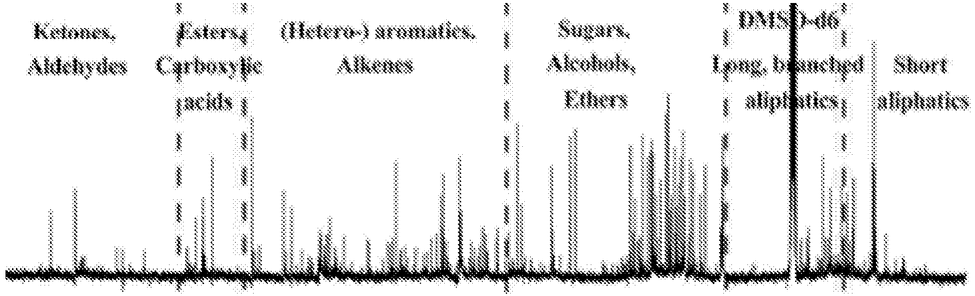

A typical GC-MS spectrum and corresponding components at specific retention times (r.t.) of the lignin oil used in the present process are displayed below, and shows the following components.

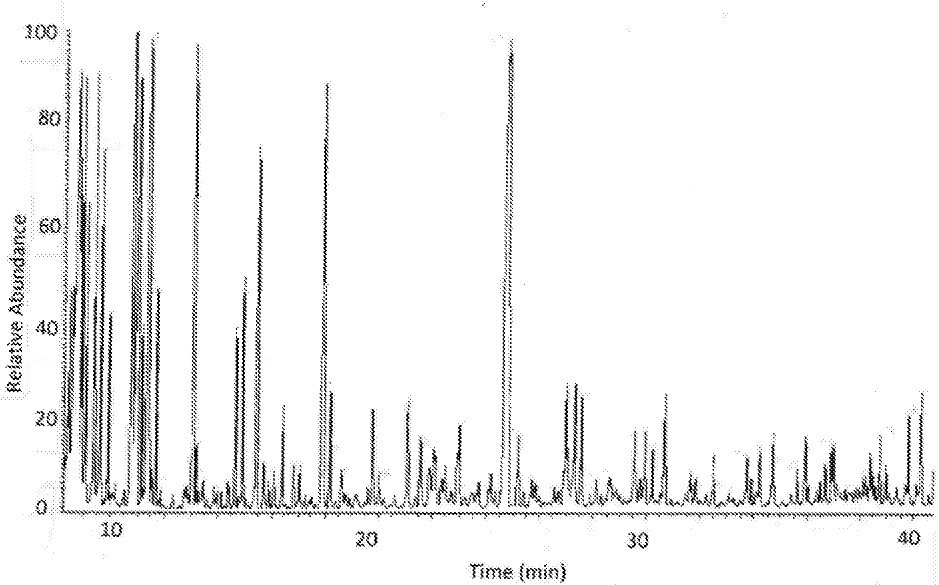

| **r.t.** | **Component** |
|---|---|
| 9.40 | 3-oxobutanoic acid |
| 10.80 | 4-methyl-4-hydroxy-2-pentanone |
| 10.99 | phenol |
| 11.39 | 2-hydroxypropanoic acid |
| 11.44 | hydroxyisobutyric acid |
| 11.70 | hydroxyacetic acid |
| 13.07 | 2-hydroxybutanoic acid |
| 14.66 | 4-hydroxypentenoic acid |
| 14.93 | 2-hydroxypentanoic acid |
| 15.46 | guaiacol |
| 17.93 | catechol |
| 18.19 | butanedioic acid |
| 19.78 | 4-methylcatechol |
| 21.09 | 2-hydroxy-2-hexenoic acid |
| 21.56 | 4-hydroxyphenylethanol |
| 24.77 | Internal standard |
| 25.20 | 4-hydroxy-3-methoxyacetophenone |
| 29.56 | phenylacetic acid |
| 30.70 | 3,4-dihydroxyphenylacetic acid? |
| 39.81 | dehydroabietic acid |
| 40.27 | abietic acid |

Also, pyrolysis oils are known to be very acidic (pH 2-3) which is another difference to the lignin oil herein. By the differences described above the same results would not be expected if a pyrolysis oil was used as feedstock for the technology developed for the present process. This hypothesis is supported by D.C. Elliott et al. in Environ. Prog. Sustain. Energy 2009, 28(3), 441-449, which indicated that pyrolysis oil requires a two-step process utilizing different catalysts (hydrotreatment at 310 or 375 °C and hydrocracking at 400 °C) to reach an almost oxygen free hydrocarbon product.

Other processes such as liquefaction of biomass (liquefaction oil) show the same issues as for the pyrolysis oil i.e. high water content, typically 18%, acidic, and a the whole range of woody components even though the oxygen content is lower, typically 15-20%. This bio-oil is also not expected to perform as the lignin oil used in the present process.

The lignin oil used as starting material for the process is preferably first passed through a desalting unit, comprising a bed of adsorbent, absorbent, or ion exchange material or combinations thereof, prior to the reactor in order to reduce metals such as sodium and potassium.

Both the desalting unit and the reactor can be operated solvent-free or with a solvent. It may be desirable to add additional viscosity modifying, and/or lubricating and/or carbonium/arenium ion scavenging components to the lignin oil before feeding it into the reactor, and before a possible desalting unit. The additional components can be a combination of a solvent, preferably methanol, ethanol, toluene, o-, m-, p-xylene, p-cymene, anisole, diesel, gasoline, benzyl alcohol; or additives such as phenol, 2-naphthol, catechol, thymol, guaiacol, cresol; and/or mixtures thereof; and the hydrocarbon product obtained by the present process. These additional components can be added in an amount of 1-80 wt-% based on the weight of the lignin oil prior to the reactor and any desalting unit, said. The preferred option is to use no solvent or only a small amount of solvent, such as 10-20 wt% based on the weight of the lignin oil in order to reduce the viscosity of the oil and to reduce the pressure drop over the reactor.

The solvent added to the lignin oil before the reactor or the desalting unit can be the whole hydrocarbon product or a fraction of the hydrocarbon product. The solvent also functions as a lubricant for the reactor. It has been found that the reactor lubricant function is also applicable for the process of making the lignin oil as defined in the applications PCT/SE2015/050969 and PCT/SE2015/050970, meaning that the whole hydrocarbon product or a hydrocarbon fraction can be added to the black liquor prior producing the lignin oil.

To improve the solubility of the hydrocarbon or a fraction of the hydrocarbon product in the lignin oil a polar solvent can be added, preferably methanol alone or methanol/benzyl alcohol mixture or ethanol alone or ethanol/methanol/benzyl alcohol mixture or a mixture of toluene/methanol or toluene/ethanol, where the methanol can be a non-pure methanol obtained from the kraft mill process.

The process for producing the hydrocarbon product according to the present invention comprises treatment of the lignin oil in a rector in the presence of one or more selected catalysts and under application of a H₂ pressure. The catalyst is one or more of a hydrodesulfurization catalyst selected from NiMo on alumina or CoMo on alumina; or a hydrodesulfurization and cracking catalyst selected from NiMo on zeolite or CoMo on zeolite, or a hydrodeoxygenation and cracking catalyst selected from NiO on zeolite, zeolite alone or combinations thereof, or a hydrodeoxygenation catalyst selected from Ni/NiO, Cu/Cr, Pd/Cu, or Pt on a support material, such as chromite and/or alumina and/or zirconia and/or graphite and/or carbon (e.g. charcoal or activated carbon) and/or silica; or one or more hydrodeoxygenation and a cracking catalyst selected from Cu/Cr, Cu/Ni, or NiO on zeolite or zeolite alone, or combinations thereof,

The reaction takes place at a H₂ pressure of 30-160 bar, preferably 50-150 bar, a gas to oil ratio (GTO) of 200-2000 l/l (STP conditions), preferably 500-1500 l/l, at a temperature of 290-400 °C, preferably 300-360 °C, and with a liquid hourly space velocity (LHSV) of 0.25-2 h⁻¹, preferably 0.5-1 h⁻¹. After the reactor, the reaction product is cooled to 20-30 °C, and is then separated by phase separation, into a gaseous phase, a liquid hydrocarbon product phase, and a water phase, so as to obtain the hydrocarbon product.

The reactor is typically a reactor comprising a packed bed, which includes three different sections. In a first section the packed bed is comprised of inert filling material and/or guard material. The guard material can be a material of high specific surface area, such as alumina, and serves to minimize catalyst deactivation which can be caused by impurities in the lignin oil, and hence extending the catalyst lifetime. Some of the guard bed is sometimes replaced by inert filling material. The first section of the packed bed may optionally also comprise catalysts selected as defined above, in an amount of up to 100%.

In a second section the packed bed is comprised the catalyst selected as defined above. Optionally, an amount of guard material can be placed on top of the catalyst in the second section. The catalysts are preferably in the form of powder or extrudates. The second section does typically not comprise any inert material.

In a third section the packed bed is comprised inert filling material, and optionally a catalyst selected as defined above, in an amount of up to 100%. The lignin oil passes first the first section, then the second section, and then the third section. The lignin oil and H₂ are fed at the top of the reactor, and moves downward through the packed bed. The products are taken out at the bottom of the reactor.

The reactor is suitably a trickle bed reactor, i.e. a reactor that uses a downward movement of a liquid and gas over a packed bed of catalyst particles.

Prior taking the reactor into operation the catalysts typically needs to be dried and activated. A nitrogen flow is preferably used for inert flushing, drying the catalysts and compacting the bed of catalysts Hydrodesulfurization catalysts can be activated in an activation procedure, which is sometimes called sulfidation, and includes e.g. pumping a dimethyldisulfide (DMDS) spiked mixture of paraffinic activation feed along with a hydrogen flow at a certain pressure through the catalyst bed. The DMDS generates H₂S during its decomposition, which in turn sulfides the catalyst. Hydrodeoxygenation catalysts can be dried and activated by the following chosen method; ramping up the temperature (1 K/min) from room temperature to 150 °C during 13 h in an atmospheric nitrogen flow rate of 20 l/h and then ramping up the hydrogen pressure (1 bar/min) to 31 bar hydrogen during 0.7 h at a hydrogen flow rate of 20 l/h followed by an immediate start of ramping up the temperature (1 K/min) to 400 °C for 8.5 h at a hydrogen flow rate of 87 l/h. After 2 h hold at 400 °C the temperature is preferably cooled down for 13.5 h to reach 150 °C, keeping the same hydrogen pressure and flow. This activation procedure is sometimes called reduction.

The reactor is loaded with the catalysts, i.e. hydrodesulfurization catalyst and/or hydrodeoxygenation catalyst and/or cracking catalyst and inert filling material, and optionally guard material. It has been found that hydrodesulfurization catalysts can by themselves also give near 100% hydrodeoxygenation and some cracking.

During the hydrodeoxygenation and the hydrodesulfurization processes that take place in the reactor, the oxygen and the sulfur is removed from the lignin oil by catalytic hydrogenolysis according to the two general equations below;
1) CₙHₘO + H₂ -> CₙHₘ + H₂O
2) CₙHₘS + H₂ -> CₙHₘ + H₂S
where CₙHₘ represents the lignin oil. The oxygen and sulfur attached to the lignin also represents functional groups containing oxygen and sulfur such as OH, SH and OR where R is any carbon or carbon chain.

The high pressure of hydrogen which is applied gives a high solubility of the hydrogen in the lignin oil, and thereby high availability of hydrogen next to the catalyst surface. When water is created the availability of hydrogen reduces as the solubility of hydrogen in water is low and this is even worse if the starting oil contains a lot of water, as is the case in for example pyrolysis oil or liquefaction oil.

The catalyst in the second section is preferably a physical mixture of the hydrodesulfurization catalyst NiMo on alumina and the combined hydrodeoxygenation and cracking catalyst NiO on zeolite. The volume ratio of NiMo on alumina and NiO on zeolite is 1-4:1, preferably 1.5-2.5:1, more preferably 2:1. By a physical mixture is meant that the catalyst extrudates or powder is well blended so as to form a packed bed of catalysts, in which the two different catalysts are evenly distributed, so as to form a homogenous catalyst bed.

The intimacy of active sites for hydrogenation and hydrocracking is best when a physical mixture of the hydrogenation and hydrocracking catalyst is used. In this case, the carbonium ion formed by hydrocracking can be saturated immediately by hydrogen, which will be supported by the metal site of the hydrogenation catalyst close to the carbonium ion.

Also, high pressure hydrogen and a high gas to oil (GTO) ratio minimize any re-polymerization or re-bonding of reactive carbonium or arenium ions, carbanions, oxiranes or radicals that are generated by zeolitic cracking. It has been found that a catalyst packed bed in the form of a combined catalyst physical mixture can give substantially lower pressure drop as compared to a packed bed wherein the catalysts are not packed as a physical mixture. This indicates that close packing of two catalysts is beneficial for operational runnability of the process. It has also been found that the product result of this combination of catalysts is a hydrocarbon product of lower boiling points, without creating more very light hydrocarbons in the gas phase.

An alternative preferred catalyst in the second section is a physical mixture of the hydrodeoxygenation catalyst Ni/NiO on alumina/graphite and the combined hydrodeoxygenation and cracking catalyst NiO on zeolite. The volume ratio of Ni/NiO on alumina/graphite and NiO on zeolite is 1-4:1, preferably 1.5-2.5:1, more preferably 2:1. This combination of catalysts and packing in the reactor gives the same or a similar result as the above mentioned physical mixture of NiMo on alumina and NiO on zeolite.

The reactor preferably comprises a pre-heating zone and an isothermal zone. In the pre-heating zone the lignin oil is pre-heated to reach the reaction temperature, and the temperature in the pre-heating zone is thus 1-10 °C below the reaction temperature. The lignin oil temperature in the isothermal zone is the same as the reaction temperature 290-400 °C, preferably 300-360 °C. The isothermal zone comprises the second section of the packed bed comprising the catalysts, and optionally a portion of the first section of the packed bed comprising guard material. The isothermal zone preferably deviates less than ±1 K from the target value for the reaction temperature, and the pre-heating zone above the catalyst preferably deviates less than ±10 K from the target value for the reaction temperature, and the same applies for the third section comprised of inert filling material below the second section comprising catalyst in the isothermal zone. The heating is typically obtained by means of a heating jacket, electricity or furnace based heating.

The products leaving the reactor are cooled by a heat exchanger to 25-30 °C, and are left to separate in a decanting unit. The non-condensable gases can be led to a gas treater to remove select gases such as H₂S and CO₂ and hydrogen is separated from the other gaseous products to be recycled into the process. The rest of the gaseous products contains very light hydrocarbons and are preferably led to a steam reformer producing H₂ and CO or CO₂, wherein H₂ and CO are optionally led back to the process. Another option is to recycle both hydrogen and gaseous products as carbon monoxide and methane can serve as reductive gas.

The liquid products are hydrocarbons with a wide range of boiling point and water. The water is a result from the hydrodeoxygenation of the lignin oil and can be led back to the kraft mill. The hydrocarbons may be distilled, in a distillation unit (4), into three fractions of different boiling point range. The hydrocarbon product can thus be separated into three fractions by means of distillation, wherein a first fraction is named light hydrocarbons and comprises hydrocarbons having a boiling point of 35-180 °C, a second fraction is named heavy hydrocarbons and comprises hydrocarbons having a boiling point of 181-340 °C, and a third fraction is named very heavy hydrocarbons and comprises hydrocarbons having a boiling point above 340 °C.

The whole hydrocarbon product itself may serve as jet fuel. The hydrocarbon products are mainly cycloalkanes and aromatic hydrocarbons and the fraction with a boiling point below 180 °C are suitable as gasoline whereas hydrocarbons with a boiling point between 180 and 340 °C are suitable as diesel. The fraction with boiling points above 340 °C may be used as fuel oil or being recycled in this process for further cracking.

Another possible use of these hydrocarbons is to make chemicals for the non-fuel market. Of particular interest is a fraction which can be separated from the second fraction and has a boiling point of 250-285 °C. This fraction comprises dibenzyl, cyclohexylethylbenzene, 4-methyldiphenylmethane, benzylcyclohexane, dicyclohexylmethane and 1,2-dicyclohexylethane, which can be used in the manufacture of chemicals for the non-fuel market.

The hydrocarbon product obtained by the above process comprises the following compounds: cyclohexane, methylcyclohexane, toluene, ethylcyclohexane, ethylcyclopentane, propylcyclohexane, propyl-benzene, 1-methyl-4-(1-methylethyl) cyclohexane, butylcyclohexane, decalin, tetralin, methyltetralin, butylbenzene, decahydro-2-methylnaphthalene, pentylcyclohexane, hexylcyclohexane, diethylcyclohexane, bicyclohexyl, biphenylmethane, 1-methyl-2-cyclohexylcyclohexane, dicyclohexylmethane, benzylcyclohexane, methyldicyclohexylmethane, 1,2-dicyclohexylethane, 1-phenyl-1-cyclohexylethane, 1-phenyl-2-2cyclohexylethane, cyclohexylethylbenzene, dibenzyl, 4-methyldiphenylmethane, 3-methyldicyclohexylmethane, 1,3-dicyclohexylpropane, n-heptadecane, 1,1'-(1,4-butanediyl)-cyclohexane, n-octadecane, 1,1-dicyclohexylpropane, and it contains less than 0.2 wt-% oxygen.

Figure 1 schematically illustrates an example of the above described process. The lignin oil starting material is fed into a desalting unit (1) which comprises a guard bed (G1) including adsorbent, ion exchanger and/or absorbent material. The desalted oil is then fed into a reactor (2), shown here as a trickle bed reactor, which includes a packed bed comprising a first section (G2/i) comprised of guard material and/or inert material, and a second section (C) comprised catalyst material and optionally an upper portion of guard material (G2), and a third section (i) comprised of inert material. The reactor (2) comprises a pre-heated zone (5) and an isothermal zone (6). After reaction the resulting composition is cooled in a heat exchanger (7) and is the left to separate in a decanting unit (3), into a gaseous phase, a liquid hydrocarbon phase (HC) and a water phase (W). The water separated in the decanting unit can be led back to the kraft mill. Gaseous products are led to a gas treater where H₂S is removed, and H₂ is then separated and recycled to the reactor, and the rest of the gases are retrieved as a gaseous hydrocarbon containing product. The liquid hydrocarbon phase (HC) is distilled (D) in a distillation unit (4) into three fractions where the first fraction comprises hydrocarbons having a boiling point of 35-180 °C (HC1), a second fraction comprises hydrocarbons having a boiling point of 181-340 °C, and (HC2), and a third fraction comprises hydrocarbons having a boiling point above 340 °C (HC3).

### EXAMPLES

### Example 1

A hydrodesulfurization catalyst, NiMo on alumina, was loaded in both the pre-heated zone and the isothermal zone of the reactor. The inert filler below the catalyst was SiC with a particle size of 125-160 µm. The inner diameter of the reactor was 4.6 mm and the length of the pre-heated zone was 155.5 mm and the length of the isothermal zone was 200 mm and the length of the inert filling zone was 145 mm.

The lignin oil feedstock passing through the reactor was 20 wt-% lignin oil in benzyl alcohol. The operating conditions were set to the following:

| | |
|---|---|
| Hydrogen pressure (bar) | 160 |
| Hydrogen flow rate (l/h) | 87 |
| Oil flow rate (ml/h) | 87 |
| GTO (l/l) (STP conditions) | 1000 |
| LHSV (h⁻¹) | 0.5 |
| Temperature (°C) | 330 |

The process was operating continuously for 4 days without issues. After 4 days the temperature was decreased to 310 °C and then operated continuously for 2 days without issues. As a last step the temperature was decreased to 290 °C and at this temperature the rig plugged in a downstream section. Increasing the temperature again dissolves the plugging.

The pressure drop over the packed reactor after the trial was 2382 mbar.

The overall conversion was very high at 310 and 330 °C. The hydrogen consumption was 40-60% of the hydrogen flow giving a product mix of hydrocarbons (analyzed by off-line GC-MS) shown below.

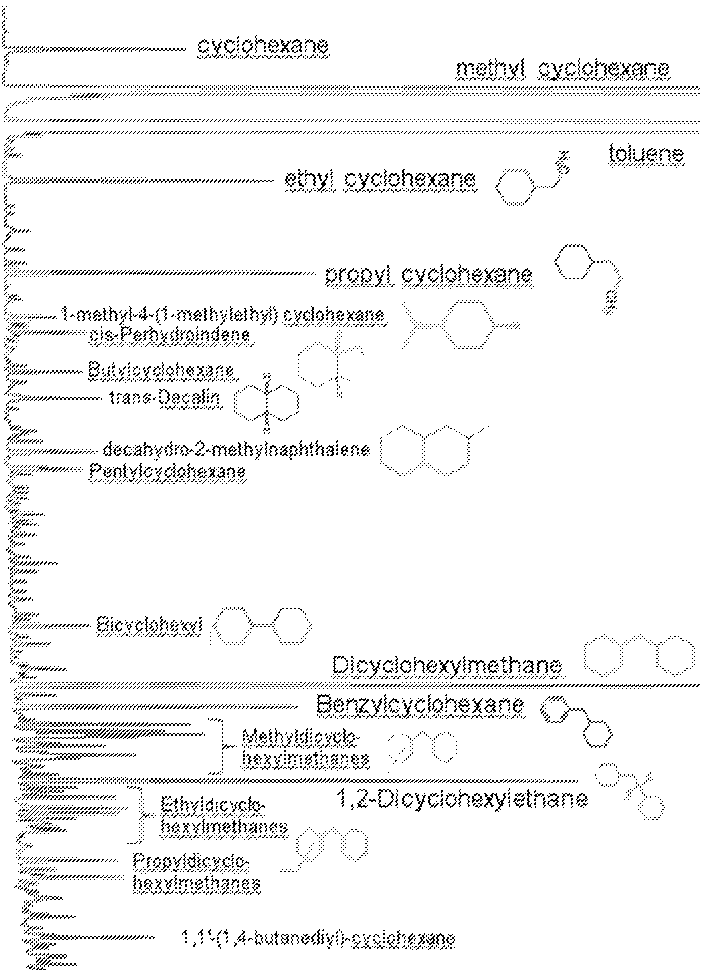

GC-MS analysis indicate no oxygenates, not even for a derivatized sample. The water product also contain no oxygenates.

The sulfur content in the hydrocarbon product was 23 ppm after 2 days of operation at 330 °C. A transparent and colorless hydrocarbon product was collected after 4 days at 330 °C whereas at lower temperatures a weak green coloring was observed.

The heat value of the hydrocarbon product was 43.8 MJ/kg.

The elemental analysis of the hydrocarbon product (ASTM D 5291 for carbon, hydrogen, nitrogen and ASTM D 1552 for sulfur) show 88.1 wt-% carbon, 11.6 wt-% hydrogen, <0.1 wt-% nitrogen, <0.05 wt-% sulfur and 0.2 wt-% oxygen by difference.

### Example 2

A hydrodesulfurization catalyst, CoMo on alumina, and a combined hydrodeoxygenation and cracking catalyst, NiO on zeolite, were loaded in the reactor. The packing design was hydrodesulfurization catalyst on top of the hydrodeoxygenation and cracking catalyst, at a volume ratio of 2:1 within the isothermal zone. The pre-heated zone contained the same hydrodesulfurization catalyst alone. The inert filler below the catalysts were SiC with a particle size of 125-160 µm. The inner diameter of the reactor was 4.6 mm and the length of the pre-heated zone was 155.5 mm, the length of the isothermal zone was 200 mm, and the length of the inert filling zone was 145 mm.

The lignin oil feedstock passing through the reactor was 20 wt% lignin oil in benzyl alcohol. The operating conditions were set to the following:

| | |
|---|---|
| Hydrogen pressure (bar) | 160 |
| Hydrogen flow rate (l/h) | 87 |
| Oil flow rate (ml/h) | 87 |
| GTO (l/l) | 1000 |
| LHSV (h⁻¹) | 0.5 |
| Temperature (°C) | 330 |

The process was operating continuously for 4 days without issues. After 4 days the temperature was decreased to 310 °C and then operated continuously for 2 days without issues. As a last step the temperature was decreased to 290 °C and at this temperature the rig plugged in a downstream section. Increasing the temperature again dissolves the plugging.

The pressure drop over the packed reactor after the trial was 2384 mbar.

The overall conversion is very high at 310 and 330 °C. The hydrogen consumption was 40-60% of the hydrogen flow giving a product mix of hydrocarbons (analyzed by off-line GC-MS) shown below.

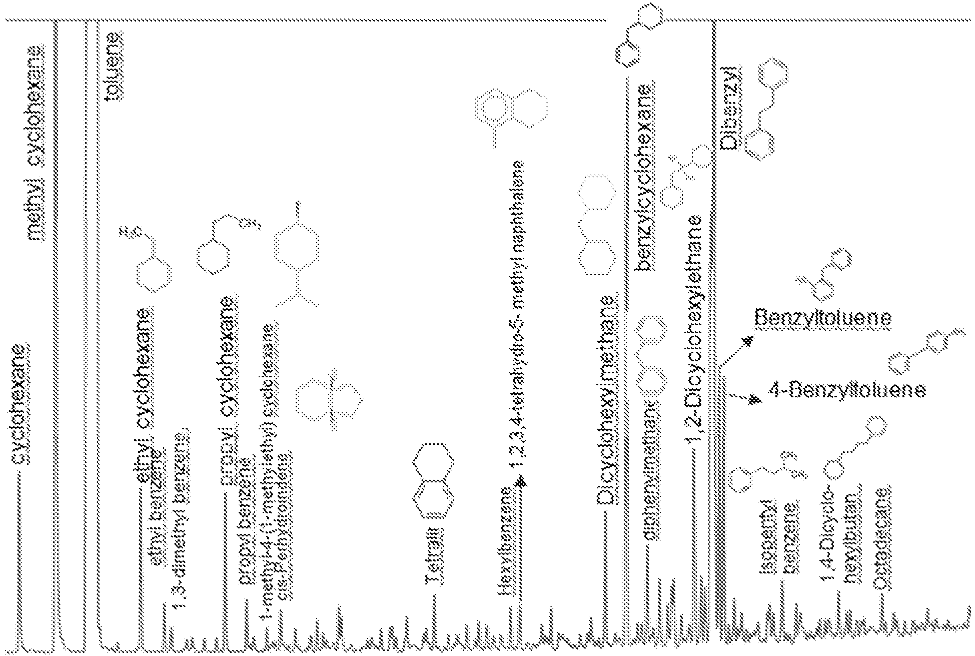

The components shown in the GC-MS spectra above indicate that this combination of catalysts gives a less saturated mixture of components compared with Example 1. The CoMo catalyst gives some hydrodeoxygenation of the solvent benzyl alcohol to toluene whereas the NiMo catalyst in Example 1 provides more hydrogenation of toluene to methylcyclohexane.

The sulfur content in the hydrocarbon product was 35 ppm after 2 days of operation at 330 °C. A transparent and weakly colored hydrocarbon product was collected after 4 days at 330 °C whereas after 6.5 days at 310 °C the weak coloring swift from being green to orange like.

### Example 3

A hydrodesulfurization catalyst, NiMo on alumina, and a combined hydrodeoxygenation and cracking catalyst, NiO on zeolite, were loaded in the reactor. The packing design was a physical mixture of the hydrodesulfurization catalyst and the hydrodeoxygenation and cracking catalyst at a volume ratio of 2:1 within the isothermal zone. The pre-heated zone contained the same hydrodesulfurization catalyst alone. The inert filler below the catalysts were SiC with a particle size of 125-160 µm. The inner diameter of the reactor was 4.6 mm and the length of the pre-heated zone was 155.5 mm and the length of the isothermal zone was 200 mm and the length of the inert filling zone was 145 mm.

The lignin oil feedstock passing through the reactor was 20 wt% lignin oil in benzyl alcohol. The operating conditions were set to the following:

| | |
|---|---|
| Hydrogen pressure (bar) | 160 |
| Hydrogen flow rate (l/h) | 87 |
| Oil flow rate (ml/h) | 87 |
| GTO (l/l) (STP conditions) | 1000 |
| LHSV (h⁻¹) | 0.5 |
| Temperature (°C) | 330 |

The process was operating continuously for 4 days without issues. After 4 days the temperature was decreased to 310 °C and then operated continuously for 2 days without issues. As a last step the temperature was decreased to 290 °C and at this temperature the rig plugged in a downstream section. Increasing the temperature again dissolves the plugging.

The pressure drop over the packed reactor after the trial was 974 mbar. A physical mix of catalysts gives the lowest pressure drop.

The overall conversion is very high at 310 and 330 °C. The hydrogen consumption was 40-60% of the hydrogen flow giving a product mix different to example 1 at temperatures above 300 °C. The hydrocarbon product was shown to contain more components of lower boiling points without creating more C1 and C2 in the gas phase. The sulfur content in the hydrocarbon product was 63 ppm after 2 days of operation at 330 °C

A transparent and less weakly colored hydrocarbon product than Example 2 was collected after 4 days at 330 °C and at lower temperatures the coloring effect was slightly more progressed than Example 1.

The hydrocarbon product was grouped by GC-MS analysis into the following component classes where the area-% of the hydrocarbons can be estimated to be weight-%, not the oxygen or nitrogen components due to a different GC-MS response factor.

| Components | Area-% |
|---|---|
| Aromates | 48.58 |
| Naphthenes | 45.86 |
| Paraffines | 0.47 |
| Olefines | 0.96 |
| Oxygen compounds | 2.39 |
| Nitrogen compounds | 1.3 |
| Rest | 0.43 |

### Example 4

A hydrodesulfurization catalyst, NiMo on alumina, and a physical mixture of the same hydrodesulfurization and a zeolite cracking catalyst, (a 1:2 volume ratio), were loaded in the reactor. The packing design was a NiMo on alumina catalyst on top of the physical mixture of NiMo on alumina and zeolite catalyst at a volume ratio of 1:1 within the isothermal zone. The pre-heated zone contained the same hydrodesulfurization catalyst. The inert filler below the catalysts were SiC with a particle size of 125-160 µm. The inner diameter of the reactor was 4.6 mm and the length of the pre-heated zone was 155.5 mm and the length of the isothermal zone was 200 mm and the length of the inert filling zone was 145 mm.

The lignin oil feedstock passing through the reactor was 20 wt-% lignin oil in benzyl alcohol. The operating conditions were set to the following:

| | |
|---|---|
| Hydrogen pressure (bar) | 160 |
| Hydrogen flow rate (l/h) | 87 |
| Oil flow rate (ml/h) | 87 |
| GTO (l/l) (STP conditions) | 1000 |
| LHSV (h⁻¹) | 0.5 |
| Temperature (°C) | 330 |

The process was operating continuously for 4 days without issues. After 4 days the temperature was decreased to 310 °C and then operated continuously for 2 days without issues. As a last step the temperature was decreased to 290 °C and at this temperature the rig plugged in a downstream section. Increasing the temperature again dissolves the plugging.

The overall conversion is very high at 310 and 330 °C. The hydrogen consumption was 40-60% of the hydrogen flow giving a product mix no different to example 1 at temperatures above 300 °C.

The pressure drop over the packed reactor after the trial was 1354 mbar indicating a higher pressure drop for a stack of catalysts compared with physical mix in Example 3. The sulfur content in the hydrocarbon product was 23 ppm after 2 days of operation at 330 °C.

A transparent and equally weakly colored hydrocarbon product as Example 3 was collected after 4 days at 330 °C and at lower temperatures the coloring effect was more progressed than Example 1 and 3.

### Example 5

A guard (alumina of high surface area and low NiMo content) and a hydrodesulfurization catalyst, NiMo on alumina, were loaded in the reactor. The packing design was a guard bed on top of the hydrodesulfurization catalyst at a volume ratio of 1:2 within the isothermal zone. The pre-heated zone contained the same hydrodesulfurization catalyst alone. The inert filler below the catalysts were SiC with a particle size of 125-160 µm. The inner diameter of the reactor was 4.6 mm and the length of the pre-heated zone was 155.5 mm and the length of the isothermal zone was 200 mm and the length of the inert filling zone was 145 mm.

The lignin oil feedstock passing through the reactor was 20 wt% crude bio-oil in benzyl alcohol. The operating conditions were set to the following:

| | |
|---|---|
| Hydrogen pressure (bar) | 160 |
| Hydrogen flow rate (l/h) | 87 |
| Oil flow rate (ml/h) | 87 |
| GTO (l/l) (STP conditions) | 1000 |
| LHSV (h⁻¹) | 0.5 |
| Temperature (°C) | 330 |

The process was operating continuously for 4 days without issues. After 4 days the temperature was decreased to 310 °C and then operated continuously for 2 days without issues. As a last step the temperature was decreased to 290 °C and at this temperature the rig plugged in a downstream section. Increasing the temperature again dissolves the plugging.

The pressure drop over the packed reactor after the trial was 2383 mbar. The overall conversion is very high at 310 and 330 °C. The hydrogen consumption was 40-60% of the hydrogen flow giving a product mix no different to example 1 at temperatures above 300 °C. The pressure drop was 2383 mbar indicating similar pressure drop as Example 1 and 2. The sulfur content in the hydrocarbon product was 89 ppm after 2 days of operation at 330 °C

A transparent and colorless hydrocarbon product was collected after 4 days at 330 °C and at lower temperatures the coloring effect was even less progressed than Example 1.

### Example 6

A hydrodeoxygenation catalyst, Ni/NiO on alumina/graphite, and a combined hydrodeoxygenation and cracking catalyst, NiO on zeolite, were loaded in the reactor. The packing design was a physical mixture of the hydrodeoxygenation catalyst and the hydrodeoxygenation and cracking catalyst at a volume ratio of 2:1 within the isothermal zone. The pre-heated zone contained the same hydrodeoxygenation catalyst alone. The inert filler below the catalysts were SiC with a particle size of 125-160 µm. The inner diameter of the reactor was 4.6 mm and the length of the pre-heated zone was 155.5 mm and the length of the isothermal zone was 200 mm and the length of the inert filling zone was 145 mm.

The lignin oil feedstock passing through the reactor was 20 wt% lignin oil in benzyl alcohol. The operating conditions were set to the following:

| | |
|---|---|
| Hydrogen pressure (bar) | 160 |
| Hydrogen flow rate (l/h) | 87 |
| Oil flow rate (ml/h) | 87 |
| GTO (l/l) (STP conditions) | 1000 |
| LHSV (h⁻¹) | 0.5 |
| Temperature (°C) | 330 |

The process was operating continuously for 1 day- without issues.

The overall conversion is very high at 330 °C. The hydrogen consumption was 80 % of the hydrogen flow during the first day giving a hydrocarbon product mix similar to example 1. A transparent and colorless hydrocarbon product was collected after 1 day at 330 °C.

## Claims

1. A process for producing a hydrocarbon product from a lignin oil, said lignin oil having an oxygen content of 10-30 wt-%, an average weight molecular weight of 500-800 g/mol with a polydispersity of 2, a heating value of 25-35 MJ/kg, a water content of 0-1.5 wt-%, a sodium content of 400-500 ppm, a potassium content of 50-100 ppm, a sulfur content of 1-2.5 wt-% and a total acid number of 110-125 mg KOH/g oil,
wherein the process for producing the hydrocarbon product comprises the steps of treating the lignin oil in a reactor in the presence of one or more of
a hydrodesulfurization catalyst selected from NiMo on alumina or CoMo on alumina; or a hydrodesulfurization and cracking catalyst selected from NiMo on zeolite or CoMo on zeolite, or a hydrodeoxygenation and cracking catalyst selected from NiO on zeolite, zeolite alone or combinations thereof, or a hydrodeoxygenation catalyst selected from Ni/NiO, Cu/Cr, Pd/Cu, or Pt on a support material, such as chromite and/or alumina and/or zirconia and/or graphite and/or carbon and/or silica;
or combinations thereof, and
applying a H₂ pressure of 30-160 bar, preferably 50-150 bar, a gas to oil ratio (GTO) of 200-2000 l/l (STP conditions), preferably 500-1500 l/l, at a temperature of 290-400 °C, preferably 300-360 °C, and with a liquid hourly space velocity (LHSV) of 0.25-2 h⁻¹ and preferably 0.5-1 h⁻¹ followed by
cooling the reaction product from the reactor to 20-30 °C, and
separating the reaction product by phase separation, into a gaseous phase, a liquid hydrocarbon product phase, and a water phase, thereby obtaining the hydrocarbon product.

2. The process of claim 1, wherein the reactor is a reactor comprising a packed bed, which includes
a first section of inert filling material and/or guard material and optionally a catalyst defined in claim 1, and
a second section of the catalyst defined in claim 1 and optionally a guard material on top of the catalyst, and
a third section of inert filling material and optionally a catalyst defined in claim 1,
and wherein the lignin oil passes first the first section, then the second section, and then the third section.

3. The process of claim 2, wherein the reactor comprises a pre-heating zone and an isothermal zone, wherein the lignin oil temperature in the isothermal zone is the reaction temperature 290-400 °C, preferably 300-360 °C, and the lignin oil temperature in the pre-heating zone is 1-10 °C below the reaction temperature, and wherein the isothermal zone comprises the second section of the packed bed, and optionally a portion of the first section of the packed bed.

4. The process of claims 2 or 3, wherein the catalyst in the second section is a physical mixture of NiMo on alumina and NiO on zeolite.

5. The process of claim 4, wherein the volume ratio of NiMo on alumina and NiO on zeolite is 1-4:1, preferably 1.5-2.5:1, more preferably 2:1.

6. The process of claims 2 or 3, wherein the catalyst in the second section is a physical mixture of Ni/NiO on alumina/graphite and NiO on zeolite.

7. The process of claim 6, wherein the volume ratio of Ni/NiO on alumina/graphite and NiO on zeolite is 1-4:1, preferably 1.5-2.5:1, more preferably 2:1.

8. The process of any one of claims 1-7, wherein the resulting hydrocarbon product is separated into three fractions by means of distillation, wherein a first fraction comprises
hydrocarbons having a boiling point of 35-180 °C,
a second fraction comprises hydrocarbons having a boiling point of 181-340 °C, and
a third fraction comprises hydrocarbons having a boiling point above 340 °C.

9. The process of claim 8, wherein a fraction having a boiling point of 250-285 °C is separated from the hydrocarbon product, said fraction comprising dibenzyl, cyclohexylethylbenzene, 4-methyldiphenylmethane, benzylcyclohexane, dicyclohexylmethane and 1,2-dicyclohexylethane.

10. The process of any one of claims 1-9, wherein the gaseous phase separated in the phase separation is led through a gas treater, whereby H₂S is removed, and H₂ is then separated and recycled to the reactor, and the rest of the gases are retrieved as a gaseous hydrocarbon containing product.

11. The process of any one of claims 1-10, wherein the gaseous hydrocarbon containing product is led to a steam reformer producing H₂ and CO or C0₂, wherein H₂ and CO are optionally led back to the process.

12. The process of any one of claims 1-11, wherein the lignin oil is desalted in a desalting unit prior to the reactor, said desalting unit comprising a bed of adsorbent, absorbent, or ion exchange material or combinations thereof.

13. The process of any one of claims 1-12, comprising addition of additional viscosity modifying, and/or lubricating and/or carbonium/arenium ion scavenging components to the lignin oil in an amount of 1-80 wt-%, preferably 10-20 wt% based on the weight of the lignin oil prior to the reactor and any desalting unit, said additional components being a combination of a solvent, preferably methanol, ethanol, toluene, o-, m-, p-xylene, p-cymene, anisole, diesel, gasoline, benzyl alcohol; or phenol, 2-naphthol, catechol, thymol, guaiacol, cresol; and/or mixtures thereof, and the hydrocarbon product obtained by the process.

14. The process of any one of claims 1-13, further comprising the step of obtaining the lignin oil fed into the process wherein
a black liquor composition comprising kraft black liquor and having a hydroxide ion concentration of 1-40 g/l, based on the volume of black liquor, is reacted, preferably under a H₂ or H₂/CO syngas pressure of 5-150 bar, at 220-350 °C for 10-120 minutes in the absence of a solid catalyst; or at 180-240 °C for 10-120 minutes in the presence of a solid catalyst, thereby causing depolymerization of lignin in the black liquor;
the reacted composition is cooled to a temperature below the boiling point of a solvent to be added subsequently, and is thereafter acidified until a pH of 4-5 is reached; and a solvent is added to the composition in order to extract oil from the composition, and the composition is separated by phase separation in a first separation step into an oil phase comprising solvent, oil, and organic acids; a first water phase comprising water, salts, and non-depolymerized lignin solids; and a second water phase comprising water and salts;
the oil phase is filtered to remove any particles, and is then desalted in a water wash step by adding water and separating by phase separation into a second separation step into an oil phase comprising oil and solvent, and a water phase comprising salts; or by adding adsorbent and/or absorbent material or ion exchange material, or combinations thereof; and
solvent comprised in the oil phase is evaporated, whereby the lignin oil is obtained.

15. A hydrocarbon product obtained by the process of claims 1-10, said product comprising
Cyclohexane
Methylcyclohexane
Toluene
Ethylcyclohexane
Ethylcyclopentane
Propylcyclohexane
Propylbenzene
1 -methyl-4-(1 -methylethyl) cyclohexane
Butylcyclohexane
Decalin
Tetralin
Methyltetralin
Butylbenzene
Decahydro-2-methylnaphthalene
Pentylcyclohexane
Hexylcyclohexane
Diethylcyclohexane
Bicyclohexyl
Biphenylmethane
1-Methyl-2-Cyclohexylcyclohexane
Dicyclohexylmethane
Benzylcyclohexane
Methyldicyclohexylmethane
1,2- Dicyclohexylethane
1-Phenyl-1-cyclohexylethane
1-Phenyl-2-2cyclohexylethane
Cyclohexylethylbenzene
Dibenzyl
4-Methyldiphenylmethane
3-Methyldicyclohexylmethane
1,3- Dicyclohexylpropane
n-Heptadecane
1,1'-(1,4-butanediyl)-cyclohexane
n-Octadecane
1,1-Dicyclohexylpropane
and containing less than 0.2 wt-% oxygen.

## Patentansprüche

1. Verfahren zur Herstellung eines Kohlenwasserstoffprodukts aus einem Ligninöl, wobei das Ligninöl einen Sauerstoffgehalt von 10 - 30 Gew.-%, ein gewichtsmittleres Molekulargewicht von 500 - 800 g/mol mit einer Polydispersität von 2, einen Heizwert von 25 - 35 MJ/kg, einen Wassergehalt von 0 - 1,5 Gew.-%, einen Natriumgehalt von 400 - 500 ppm, einen Kaliumgehalt von 50 - 100 ppm, einen Schwefelgehalt von 1 - 2,5 Gew.-% und eine Gesamtsäurezahl von 110 - 125 mg KOH/g Öl aufweist,
wobei das Verfahren zur Herstellung des Kohlenwasserstoffprodukts die Schritte Behandeln des Ligninöls in einem Reaktor in Gegenwart eines oder mehrerer eines Hydrodesulfurierungskatalysators, ausgewählt aus NiMo auf Aluminiumoxid oder CoMo auf Aluminiumoxid; oder eines Hydrodesulfurierungs- und Crackkatalysators, ausgewählt aus NiMo auf Zeolith oder CoMo auf Zeolith, oder eines Hydrodesoxygenierungs- und Crackkatalysators, ausgewählt aus NiO auf Zeolith, Zeolith allein oder Kombinationen davon, oder eines Hydrodesoxygenierungskatalysators, ausgewählt aus Ni/NiO, Cu/Cr, Pd/Cu oder Pt auf einem Trägermaterial wie zum Beispiel Chromit und/oder Aluminiumoxid und/oder Zirkoniumoxid und/oder Graphit und/oder Kohlenstoff und/oder Siliziumdioxid; oder Kombinationen davon, und
Anwenden eines H₂-Drucks von 30 - 160 bar, bevorzugt 50 - 150 bar, eines Gas- zu Öl-Verhältnisses (GTO) von 200 - 2000 l/l (STP-Bedingungen), bevorzugt 500 - 1500 l/l, bei einer Temperatur von 290 - 400 °C, bevorzugt 300 - 360 °C, und mit einer stündlichen Raumgeschwindigkeit der Flüssigkeit (LHSV) von 0,25 - 2 h⁻¹ und bevorzugt 0,5-1 h⁻¹, gefolgt von
Kühlen des Reaktionsprodukts von dem Reaktor auf 20 - 30 °C und
Trennen des Reaktionsproduktes durch Phasentrennung in eine Gasphase, eine flüssige Kohlenwasserstoffproduktphase und eine Wasserphase, wodurch das Kohlenwasserstoffprodukt erhalten wird, umfasst.

2. Verfahren nach Anspruch 1, wobei der Reaktor ein Reaktor ist, umfassend ein Festbett, das einen
ersten Abschnitt eines inerten Füllmaterials und/oder Schutzmaterials und gegebenenfalls einen in Anspruch 1 definierten Katalysator und
einen zweiten Abschnitt des in Anspruch 1 definierten Katalysators und gegebenenfalls ein Schutzmaterial auf dem Katalysator und
einen dritten Abschnitt eines inerten Füllmaterials und gegebenenfalls eines in Anspruch 1 definierten Katalysators, einschließt,
und wobei das Ligninöl zuerst den ersten Abschnitt, dann den zweiten Abschnitt und dann den dritten Abschnitt passiert.

3. Verfahren nach Anspruch 2, wobei der Reaktor eine Vorheizzone und eine isotherme Zone umfasst, wobei die Ligninöl-Temperatur in der isothermen Zone die Reaktionstemperatur 290 - 400 °C ist, bevorzugt 300 - 360 °C, und die Ligninöl-Temperatur in der Vorheizzone 1-10 °C unter der Reaktionstemperatur ist, und wobei die isotherme Zone den zweiten Abschnitt des Festbetts und gegebenenfalls einen Teil des ersten Abschnitts des Festbetts umfasst.

4. Verfahren nach Ansprüchen 2 oder 3, wobei der Katalysator im zweiten Abschnitt eine physikalische Mischung aus NiMo auf Aluminiumoxid und NiO auf Zeolith ist.

5. Verfahren nach Anspruch 4, wobei das Volumenverhältnis von NiMo auf Aluminiumoxid und NiO auf Zeolith 1 - 4:1 ist, bevorzugt 1,5 - 2,5:1, stärker bevorzugt 2:1.

6. Verfahren nach Ansprüchen 2 oder 3, wobei der Katalysator im zweiten Abschnitt eine physikalische Mischung aus Ni/NiO auf Aluminiumoxid/Graphit und NiO auf Zeolith ist.

7. Verfahren nach Anspruch 6, wobei das Volumenverhältnis von Ni/NiO auf Aluminiumoxid/Graphit und NiO auf Zeolith 1 - 4:1 ist, bevorzugt 1,5 - 2,5:1, stärker bevorzugt 2:1.

8. Verfahren nach einem der Ansprüche 1 - 7, wobei das resultierende Kohlenwasserstoffprodukt mittels Destillation in drei Fraktionen getrennt wird, wobei
eine erste Fraktion Kohlenwasserstoffe mit einem Siedepunkt von 35 - 180 °C umfasst,
eine zweite Fraktion Kohlenwasserstoffe mit einem Siedepunkt von 181 - 340 °C umfasst und
eine dritte Fraktion Kohlenwasserstoffe mit einem Siedepunkt über 340 °C umfasst.

9. Verfahren nach Anspruch 8, wobei eine Fraktion mit einem Siedepunkt von 250 - 285 °C von dem Kohlenwasserstoffprodukt getrennt wird, wobei die Fraktion Dibenzyl, Cyclohexylethylbenzol, 4-Methyldiphenylmethan, Benzylcyclohexan, Dicyclohexylmethan und 1,2-Dicyclohexylethan umfasst.

10. Verfahren nach einem der Ansprüche 1 - 9, wobei die Gasphase, die in der Phasentrennung getrennt wurde, durch einen Gasaufbereiter geleitet wird, wodurch H₂S entfernt wird und H₂ wird dann getrennt und in den Reaktor zurückgeführt und der Rest der Gase wird als ein gasförmiges kohlenwasserstoffhaltiges Produkt zurückgewonnen.

11. Verfahren nach einem der Ansprüche 1 - 10, wobei das gasförmige kohlenwasserstoffhaltige Produkt zu einem Dampfreformer geleitet wird, der H₂ und CO oder CO₂ herstellt, wobei H₂ und CO gegebenenfalls zum Verfahren zurückgeleitet werden.

12. Verfahren nach einem der Ansprüche 1 - 11, wobei das Ligninöl vor dem Reaktor in einer Entsalzungseinheit entsalzt wird, wobei die Entsalzungseinheit ein Bett aus Adsorbtions-, Absorbtions- oder lonenaustauschermaterial oder Kombinationen davon umfasst.

13. Verfahren nach einem der Ansprüche 1 - 12, umfassend die Zugabe von zusätzlichen viskositätsmodifizierenden und/oder schmierenden und/oder Carbonium-/Areniumionen-abfangenden Komponenten zu dem Ligninöl in einer Menge von 1 - 80 Gew.-%, bevorzugt 10 - 20 Gew.-%, bezogen auf das Gewicht des Ligninöls vor dem Reaktor und einer beliebigen Entsalzungseinheit, wobei die zusätzlichen Komponenten eine Kombination eines Lösungsmittels, bevorzugt Methanol, Ethanol, Toluol, o-, m-, p-Xylol, p-Cymol, Anisol, Diesel, Benzin, Benzylalkohol oder Phenol, 2-Naphthol, Catechol, Thymol, Guajakol, Kresol; und/oder Mischungen davon und das durch das Verfahren erhaltene Kohlenwasserstoffprodukt sind.

14. Verfahren nach einem der Ansprüche 1 - 13, weiterhin umfassend den Schritt Erhalten des Ligninöls, das in das Verfahren eingespeist wird, wobei
eine Schwarzlaugenzusammensetzung das Kraftschwarzlauge umfasst und eine Hydroxidionenkonzentration von 1 - 40 g/l aufweist, bezogen auf das Volumen der Schwarzlauge, bevorzugt unter einem H₂- oder H₂/CO-Synthesegasdruck von 5 - 150 bar, bei 220 - 350 °C für 10 - 120 Minuten in Abwesenheit eines festen Katalysators umgesetzt wird; oder bei 180 - 240 °C für 10 - 120 Minuten in Gegenwart eines festen Katalysators, wodurch eine Depolymerisation von Lignin in der Schwarzlauge verursacht wird;
die umgesetzte Zusammensetzung auf eine Temperatur unterhalb des Siedepunkts eines Lösungsmittels, das anschließend zugegeben werden soll, gekühlt wird und danach angesäuert wird, bis ein pH-Wert von 4 - 5 erreicht ist; und ein Lösungsmittel zu der Zusammensetzung gegeben wird, um Öl aus der Zusammensetzung zu extrahieren, und die Zusammensetzung durch Phasentrennung in einem ersten Trennschritt in eine Ölphase, umfassend Lösungsmittel, Öl und organische Säuren; eine erste Wasserphase, umfassend Wasser, Salze und nicht depolymerisierte Ligninfeststoffe; und eine zweite Wasserphase, umfassend Wasser und Salze, getrennt wird;
die Ölphase filtriert wird, um beliebige Partikel zu entfernen, und dann in einem Wasserwaschschritt durch Zugabe von Wasser entsalzt wird und durch Phasentrennung in einen zweiten Trennschritt in eine Ölphase, umfassend Öl und Lösungsmittel, und eine Wasserphase, umfassend Salze, getrennt wird oder durch Zugabe von Adsorbtions- und/oder Absorbtionsmaterial oder lonenaustauschermaterial oder Kombinationen davon; und das in der Ölphase enthaltene Lösungsmittel verdampft wird, wodurch das Ligninöl erhalten wird.

15. Kohlenwasserstoffprodukt, erhalten durch das Verfahren der Ansprüche 1 - 10, wobei das Produkt
Cyclohexan
Methylcyclohexan
Toluol
Ethylcyclohexan
Ethylcyclopentan
Propylcyclohexan
Propylbenzol
1-Methyl-4-(1-methylethyl)-cyclohexan
Butylcyclohexan
Decalin
Tetralin
Methyltetralin
Butylbenzol
Decahydro-2-methylnaphthalin
Pentylcyclohexan
Hexylcyclohexan
Diethylcyclohexan
Bicyclohexyl
Biphenylmethan
1-Methyl-2-cyclohexylcyclohexan
Dicyclohexylmethan
Benzylcyclohexan
Methyldicyclohexylmethan
1,2-Dicyclohexylethan
1-Phenyl-1-cyclohexylethan
1-Phenyl-2-2cyclohexylethan
Cyclohexylethylbenzol
Dibenzyl
4-Methyldiphenylmethan
3-Methyldicyclohexylmethan
1,3-Dicyclohexylpropan
n-Heptadecan
1,1'-(1,4-Butandiyl)-cyclohexan
n-Octadecan
1,1-Dicyclohexylpropan umfasst
und weniger als 0,2 Gew.-% Sauerstoff enthält.

## Revendications

1. Procédé pour produire un produit hydrocarboné à partir d'une huile de lignine, ladite huile de lignine ayant une teneur en oxygène de 10-30 % en poids, une masse moléculaire moyenne en poids de 500-800 g/mol avec une polydispersité de 2, un pouvoir calorifique de 25-35 MJ/kg, une teneur en eau de 0-1,5 % en poids, une teneur en sodium de 400-500 ppm, une teneur en potassium de 50-100 ppm, une teneur en soufre de 1-2,5 % en poids et un indice d'acide total de 110-125 mg de KOH/g d'huile,
où le procédé pour produire le produit hydrocarboné comprend les étapes de traitement de l'huile de lignine dans un réacteur en présence d'un ou plusieurs de
un catalyseur d'hydrodésulfuration choisi parmi NiMo sur alumine ou CoMo sur alumine ; ou un catalyseur d'hydrodésulfuration et de craquage choisi parmi NiMo sur zéolite ou CoMo sur zéolite, ou un catalyseur d'hydrodésoxygénation et de craquage choisi parmi NiO sur zéolite, une zéolite seule ou leurs combinaisons, ou un catalyseur d'hydrodésoxygénation choisi parmi Ni/NiO, Cu/Cr, Pd/Cu ou Pt sur un matériau support, comme la chromite et/ou l'alumine et/ou la zircone et/ou le graphite et/ou le carbone et/ou la silice ;
ou leurs combinaisons, et
d'application d'une pression de H₂ de 30-160 bars, de préférence de 50-150 bars, d'un rapport gaz à huile (GTO) de 200-2000 l/l (conditions STP), de préférence de 500-1500 l/l, à une température de 290-400°C, de préférence de 300-360°C, et avec un volume liquide par volume par heure (LHSV) de 0,25-2 h⁻¹ et de préférence de 0,5-1 h⁻¹ suivie par
le refroidissement du produit réactionnel provenant du réacteur à 20-30°C, et
de séparation du produit réactionnel par séparation des phases, en une phase gazeuse, une phase de produit hydrocarboné liquide et une phase aqueuse, pour obtenir ainsi le produit hydrocarboné.

2. Procédé selon la revendication 1, où le réacteur est un réacteur comprenant un lit tassé, qui inclut
une première section de matériau de remplissage inerte et/ou de matériau de garde et éventuellement d'un catalyseur défini dans la revendication 1, et
une seconde section du catalyseur défini dans la revendication 1 et éventuellement d'un matériau de garde au-dessus du catalyseur, et
une troisième section de matériau de remplissage inerte et éventuellement d'un catalyseur défini dans la revendication 1,
et où l'huile de lignine passe d'abord dans la première section, puis dans la seconde section et ensuite dans la troisième section.

3. Procédé selon la revendication 2, où le réacteur comprend une zone de préchauffage et une zone isotherme, où la température de l'huile de lignine dans la zone isotherme est la température de réaction 290-400°C, de préférence 300-360°C, et la température de l'huile de lignine dans la zone de préchauffage est 1-10°C en-dessous de la température de réaction, et où la zone isotherme comprend la seconde section du lit tassé, et éventuellement une partie de la première section du lit tassé.

4. Procédé selon les revendications 2 ou 3, où le catalyseur dans la seconde section est un mélange physique de NiMo sur alumine et de NiO sur zéolite.

5. Procédé selon la revendication 4, où le rapport en volume de NiMo sur alumine et de NiO sur zéolite est 1-4 : 1, de préférence 1,5-2,5 : 1, de préférence encore 2 : 1.

6. Procédé selon les revendications 2 ou 3, où le catalyseur dans la seconde section est un mélange physique de Ni/NiO sur alumine/graphite et de NiO sur zéolite.

7. Procédé selon la revendication 6, où le rapport en volume de Ni/NiO sur alumine/graphite et de NiO sur zéolite est 1-4 : 1, de préférence 1,5-2,5 : 1, de préférence encore 2 : 1.

8. Procédé selon l'une quelconque des revendications 1-7, où le produit hydrocarboné résultant est séparé en trois fractions par distillation, où une première fraction comprend
des hydrocarbures ayant un point d'ébullition de 35-180°C,
une seconde fraction comprend des hydrocarbures ayant un point d'ébullition de 181-340°C, et
une troisième fraction comprend des hydrocarbures ayant un point d'ébullition au-dessus de 340°C.

9. Procédé selon la revendication 8, où une fraction ayant un point d'ébullition de 250-285°C est séparée du produit hydrocarboné, ladite fraction comprenant du dibenzyle, du cyclohexyléthylbenzène, du 4-méthyldiphénylméthane, du benzylcyclohexane, du dicyclohexylméthane et du 1,2-dicyclohexyléthane.

10. Procédé selon l'une quelconque des revendications 1-9, où la phase gazeuse séparée dans la séparation des phases est conduite à travers un dispositif de traitement des gaz, de sorte que H₂S est retiré, et H₂ est ensuite séparé et recyclé dans le réacteur, et le reste des gaz est récupéré sous forme d'un produit contenant des hydrocarbures gazeux.

11. Procédé selon l'une quelconque des revendications 1-10, où le produit contenant des hydrocarbures gazeux est conduit à un dispositif de reformage à la vapeur produisant H₂ et CO ou CO₂, où H₂ et CO sont éventuellement renvoyés au procédé.

12. Procédé selon l'une quelconque des revendications 1-11, où l'huile de lignine est débarrassée des sels dans une unité de retrait des sels avant le réacteur, ladite unité de retrait des sels comprenant un lit d'adsorbant, d'absorbant ou de matériau d'échange d'ions ou leurs combinaisons.

13. Procédé selon l'une quelconque des revendications 1-12, comprenant l'addition de composants supplémentaires modifiant la viscosité, et/ou lubrifiants et/ou piégeant les ions carbonium/arénium à l'huile de lignine en une quantité de 1-80 % en poids, de préférence de 10-20 % en poids sur la base du poids de l'huile de lignine avant le réacteur et toute unité de retrait des sels, lesdits composants supplémentaires étant une combinaison d'un solvant, de préférence le méthanol, l'éthanol, le toluène, le o-, m-, p-xylène, le p-cymène, l'anisole, le diesel, l'essence, l'alcool benzylique ; ou le phénol, le 2-naphtol, le pyrocatéchol, le thymol, le gaïacol, le crésol ; et/ou leurs mélanges, et le produit hydrocarboné obtenu par le procédé.

14. Procédé selon l'une quelconque des revendications 1-13, comprenant en outre l'étape d'obtention de l'huile de lignine introduite dans le procédé où
une composition de liqueur noire comprenant de la liqueur noire kraft et ayant une concentration en ions hydroxyde de 1-40 g/l, sur la base du volume de liqueur noire, est mise à réagir, de préférence sous une pression de H₂ ou de gaz de synthèse H₂/CO de 5-150 bars, à 220-350°C pendant 10-120 minutes en l'absence d'un catalyseur solide; ou à 180-240°C pendant 10-120 minutes en présence d'un catalyseur solide, provoquant ainsi la dépolymérisation de la lignine dans la liqueur noire ; la composition mise à réagir est refroidie à une température en-dessous du point d'ébullition d'un solvant destiné à être ajouté ensuite, puis est acidifiée jusqu'à ce qu'un pH de 4-5 soit atteint ; et un solvant est ajouté à la composition pour extraire l'huile de la composition, et la composition est séparée par séparation des phases dans une première étape de séparation en une phase huileuse comprenant du solvant, de l'huile et des acides organiques ; une première phase aqueuse comprenant de l'eau, des sels et des solides de lignine non dépolymérisée ; et une seconde phase aqueuse comprenant de l'eau et des sels ; la phase huileuse est filtrée pour retirer toutes les particules, et est ensuite débarrassée des sels dans une étape de lavage à l'eau par addition d'eau et séparation par séparation des phases dans une seconde étape de séparation en une phase huileuse comprenant de l'huile et du solvant, et une phase aqueuse comprenant des sels ; ou par addition de matériau adsorbant et/ou absorbant ou de matériau d'échange d'ions, ou leurs combinaisons ; et le solvant compris dans la phase huileuse est évaporé, de sorte que l'huile de lignine est obtenue.

15. Produit hydrocarboné obtenu par le procédé selon les revendications 1-10, ledit produit comprenant
du cyclohexane,
du méthylcyclohexane,
du toluène,
de l'éthylcyclohexane,
de l'éthylcyclopentane,
du propylyclohexane,
du propylbenzène,
du 1-méthyl-4-(1-méthyléthyl)cyclohexane,
du butylcyclohexane,
de la décaline,
de la tétraline,
de la méthyltétraline,
du butylbenzène,
du décahydro-2-méthylnaphtalène,
du pentylcyclohexane,
de l'hexylcyclohexane,
du diéthylcyclohexane,
du bicyclohexyle,
du biphénylméthane,
du 1-méthyl-2-cyclohexylcyclohexane,
du dicyclohexylméthane,
du benzylcyclohexane,
du méthyldicyclohexylméthane,
du 1,2-dicyclohexyléthane,
du 1-phényl-1-cyclohexyléthane,
du 1-phényl-2-cyclohexyléthane,
du cyclohexyléthylbenzène,
du dibenzyle,
du 4-méthyldiphénylméthane,
du 3-méthyldicyclohexylméthane,
du 1,3-dicyclohexylpropane,
du n-heptadécane,
du 1, 1'-(1,4-butanediyl)-cyclohexane,
du n-octadécane,
du 1,1-dicyclohexylpropane
et contenant moins de 0,2 % en poids d'oxygène.
